# EUROPEAN PATENT APPLICATION

(11) **EP 0 530 711 A1**
(43) Date of publication of application: **10.03.1993**
(21) Application number: 92114753.4
(22) Date of filing: 28.08.1992
(51) Int. Cl.: G11B 20/10, H04S 1/00, G11B 31/00, G11B 27/00

(54) **Recording medium playing apparatus and compound AV system including such a playing apparatus**

(30) Priority: 02.09.1991 JP 221852/91
(71) Applicant: PIONEER ELECTRONIC CORPORATION, Meguro-ku Tokyo 153 (JP)
(72) Inventor: Yoshio, Junichi, c/o Pioneer Tokorozawa Plant, Tokorozawa-City, Saitama (JP); Yoshida, Masayuki, c/o Pioneer Tokorozawa Plant, Tokorozawa-City, Saitama (JP)
(74) Representative: Manitz, Gerhart, Dipl.-Phys. Dr.

(57) **Abstract**

A recording medium playing apparatus which can execute a desired operating mode by using music identification signals and a medium identification signal on a recording medium and a compound AV system including such a playing apparatus. A recording medium is played on which a plurality of music signals have been recorded together with music identification signals corresponding to the music signals and, further, a medium identification signal has also been recorded, so that a read signal indicative of the recording information on the recording medium is produced, and then the music signals, music identification signals, and medium identification signal are separated and extracted from the read signal. The operating mode corresponding to the music identification signal and medium identification signal is instructed. Due to this, the medium identification signal and the music identification signal are extracted from the read signal obtained by playing the recording medium. The sound field control according to these identification signals can be performed. The operation control in the operating mode according to the identification signals can be executed without performing complicated operations. The sound field suitable for the selected music piece can be automatically set during the play of the selected music piece. A plurality of AV apparatuses can be automatically controlled by a desired control sequence which is defined by both of medium and music identification signals read from the recording medium prepared for this purpose.

## Description

### BACKGROUND OF THE INVENTION

### Field of the Invention

The invention relates to an apparatus for playing a recording medium such as what is called an optical disc or the like.

### Description of the Related Art

As a recording medium, like what is called a CD (compact disc), there is a recording medium in which a plurality of music signals (music signal denotes the signal indicative of a group of whole information such as one musical piece) are recorded together with music identification signals (for example, track numbers in the CD format) corresponding to the music signals and, further, a medium identification signal (for instance, disc number in the TOC information of the CD) to identify the medium itself is also recorded.

With respect to a playing apparatus of such a recording medium, a technique to perform a desired sound field control by the medium identification signal has been proposed in Japanese Patent Application No. 2-35958 by the same applicant as the present invention.

Such a technique is convenient because a desired sound field control mode can previously be set every medium.

Even in the same recording medium, however, a need to perform different sound field controls for different pieces of music is considered.

In recent years, there has been known a compound or composite AV system having not only a recording medium playing apparatus but also at least one of AV signal processing apparatuses such as TV receiver, amplifier, tuner, VTR as another recording medium playing apparatus, and the like and also having a controller to control the operation of such AV signal processing apparatuses.

In case of demonstrating such a compound AV system in order to introduce various functions in a store to sell it, it is the present situation that the sales person properly shows a few operation examples, so that there is a problem such that the success or failure of the demonstration depends on the ability or taste of the sales person.

### OBJECT OF THE INVENTION

It is, therefore, an object of the present invention to provide a recording medium playing apparatus which can execute a desired operating mode by using a music identification signal and a medium identification signal on a recording medium and to provide a compound AV system including such a recording medium playing apparatus.

According to the present invention, there is provided a recording medium playing apparatus for playing a recording medium on which a plurality of music signals have been recorded together with music identification signals corresponding to the music signals and, further, a medium identification signal has also been recorded and for producing a read signal indicative of the recording information on the recording medium, wherein the playing apparatus comprises: separating and extracting means for separating and extracting the music signals, the music identification signals, and the medium identification signal from the read signal; sound field mode instructing means for generating a sound field mode command corresponding to the music identification signal and the medium identification signal from the separating and extracting means; and sound field control means for executing a sound field control process to the music signal in accordance with the sound field mode command.

According to the present invention, there is provided a compound AV system comprising: playing means for playing a recording medium on which a plurality of music signals have been recorded together with music identification signals corresponding to the music signals and, further, a medium identification signal has also been recorded and for producing a read signal indicative of the recording information on the recording medium; at least one AV signal processing means; and control means for controlling the operations of the playing means and the AV signal processing means, wherein the control means is constructed by separating and extracting means for separating and extracting the music signals, the music identification signals, and the medium identification signal from the read signal and operation instructing means for giving an operation command to instruct the operating mode corresponding to the music identification signal and the medium identification signal from the separating and extracting means to the AV signal processing means.

The recording medium playing apparatus according to the present invention executes a sound field control which is determined by both of the music identification signal and the medium identification signal extracted from the read signal which is obtained from the recording medium to each of the music signals.

The compound AV system according to the invention extracts the music identification signal and the medium identification signal from the read signal which is obtained from the recording medium and produces a prepared operation command on the basis of both of the extracted signals and controls the AV signal processing means in accordance with the operation command.

### BRIEF DESCRIPTION OF THE DRAWINGS

Fig. 1 is a block diagram showing an embodiment of the invention;
Fig. 2 is a table of registration numbers corresponding to a sound field mode;
Fig. 3 is a flowchart of a subroutine for the sound field registration according to the invention;
Fig. 4 is a correspondence table between the discs whose sound fields have been registered and the music names;
Fig. 5 is a flowchart showing the operation of a controller 8 in Fig. 1;
Fig. 6 is a block diagram of a DSP 12 in a sound field setting circuit 6 in Fig. 1;
Fig. 7 is a block diagram showing an example of a compound AV system;
Fig. 8 is a table showing the operation modes corresponding to medium identification numbers and music numbers according to the invention; and
Fig. 9 is a flowchart showing a subroutine to execute a sequence control according to the invention.

### DETAILED DESCRIPTION OF THE PREFERRED EMBODIMENT

An embodiment of the invention will now be described in detail hereinbelow while referring to the accompanying drawings.

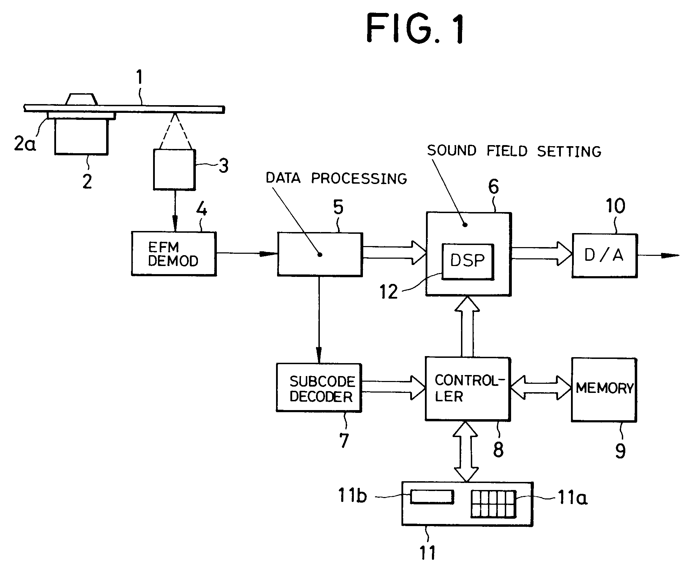

Fig. 1 shows a compact disc player as a recording medium playing apparatus. In the compact disc player, a main code indicative of an audio signal and a subcode indicative of an identification signal have been recorded on a compact disc (hereinafter, simply referred to as a disc) 1. Identification information of the disc such as disc title, disc side, and the like has been contained in a TOC signal recorded at a lead-in area of the inner rim portion of the disc. Music title identification information has been recorded in the subcode of every music in a program area.

The disc 1 is rotated by a turntable 2a and a spindle motor 2 of the disc playing apparatus. A read signal from a signal reading section 3 including a pickup is supplied to an EFM demodulating circuit 4 and EFM demodulated. After completion of the EFM demodulation, data processes such as error detection, error correction, deinterleave, and the like are executed in a data processing circuit 5 while functions as extracting means of the digital audio signal. The digital audio signal generated from the data processing circuit 5 is supplied to a sound field setting circuit 6 which functions as sound field control means. The subcode is supplied to a subcode decoder 7. The disc number as disc identification information and the music number (track number) as music title identification information are detected in the subcode decoder 7.

The disc number information and the music number obtained by the subcode decoder 7 are supplied to a controller 8. The controller 8 reads out the data of the sound field mode corresponding to the above identification information from a memory 9 and generates a sound field mode command to the sound field setting circuit 6. In the sound field setting circuit 6, the digital audio signal is subjected to a sound field control according to the sound field mode command and then is supplied to a D/A converter 10, which converts the coming signal into an analog audio signal which is in turn is supplied to an output stage (not shown). Various operations such as playing operation, scanning operation, and the like of the disc playing apparatus are executed by the controller 8 through a servo apparatus (not shown).

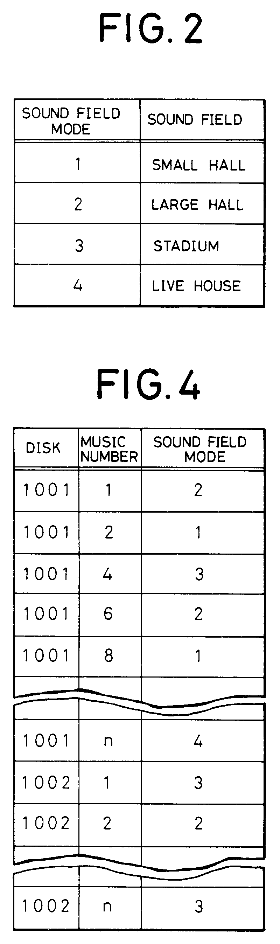

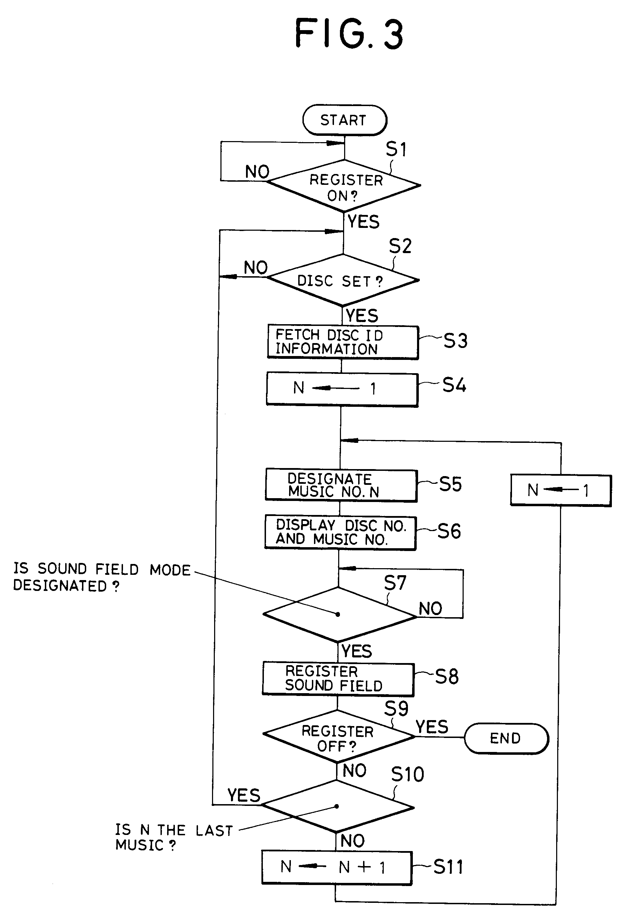

An operation key board 11a has a sound field registration key (not shown). When a disc whose sound field should be registered is set and the sound field registration key is turned on, the music number corresponding to the music title is displayed on a display 11b. When the number of the sound field mode corresponding to the music is key-inputted in accordance with the sound field mode table of Fig. 2, the sound field is registered. As shown in this table, the sound field modes "1", "2", "3", and "4" denote data of the sound field mode commands of a small hall, a large hall, a stadium, and a live house. Fig. 3 shows a subroutine for sound field registration which is executed by the controller 8.

In the subroutine, a check is made to see if a sound field registration button has been turned on or not (step S1). If YES, a check is made to see if the disc 1 has been set onto the turntable 2a or not (step S2). When the disc 1 is set, the disc identification signal from the subcode decoder 7 is fetched (step S3). Subsequently, N is set into "1" (step S4) and the music number N is designated (step S5). Thus, the disc number and the music number are displayed on the display 11b (step S6). The apparatus waits a designation of a sound field mode is designated (step S7). When a sound field mode is designated, the designated sound field mode is registered in correspondence to the disc number and the music number (step S8). A check is now made to see if the sound field registration button has been turned off or not (step S9). If YES, the subroutine is finished. So long as the sound field registration button is ON, the sound field registering operation is repeated until the music number reaches the last music number (step S10 and S11).

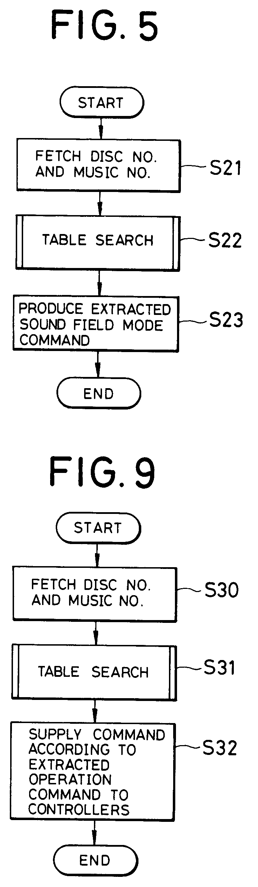

In a registration table of Fig. 4 formed by the above sound field registering routine, the address in the memory 9 corresponding to 1001 indicative of the disc identification information and the identification information and the identification information of 1 to n indicative of the music title identification information (hereinafter, simply referred to as a music number) is determined. The sound field mode stored in the memory 9 is read out. A sound field mode command is given to the sound field setting circuit 6. When therefore, the music number 1 is read out, the sound field mode command of the sound field mode "2" corresponding to the music number 1 is given to the sound field setting circuit 6. A simulated sound field as if the music was played in a large hall is set for the digital audio signal of the music number 1.

In case of the music number 2, the sound field of a small hall of the sound field mode "1" is set in a manner similar to the above. The pieces of music which are read out are played sequentially in accordance with the order of the music numbers or are selectively played in response to an operation command from the operation key 11a of a user interface 11.

It will be obviously understood that the registration table is stored in a backup memory (not shown) in the memory 9 and even if a power supply of the apparatus is turned off, the registration table is held without being erased.

A sound field setting subroutine shown in Fig. 5 is executed when the controller 8 instructs the playing operation to the playing apparatus. In this subroutine, the disc number and the music number which are obtained from the subcode decoder 7 are first fetched (step S21). Subsequently, the sound field mode corresponding to the disc number and the music number which have been fetched is searched from the table (step S22). The sound field mode command is formed in accordance with the sound field mode obtained as mentioned above and is given to the sound field setting circuit 6 (step S23).

By previously registering the sound field, the sound field is automatically set each time the music is played. The disc number and the music number of the music which is at present being played can be displayed on the display 11b of the user interface 11.

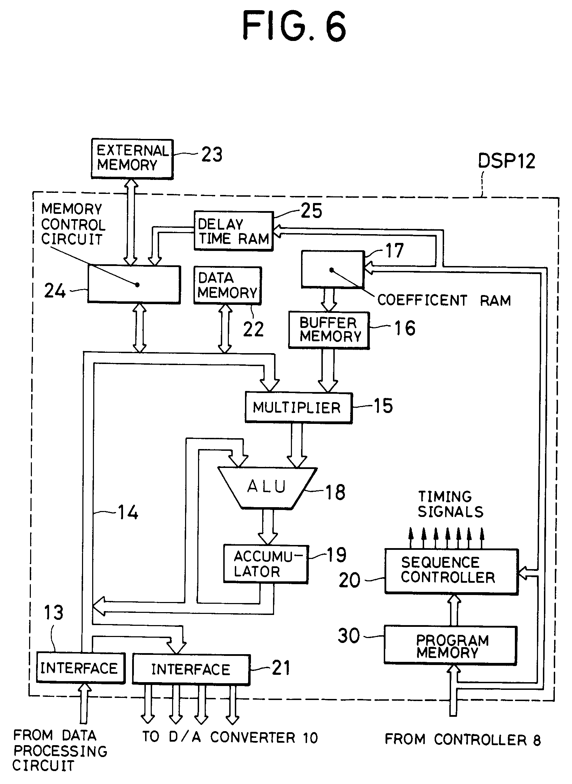

The automatic sound field setting operation of the sound field setting circuit 6 which has received the sound field mode command will now be described in detail with reference to Fig. 6.

In the sound field setting circuit 6, the digital audio signal from the data processing circuit 5 is supplied to an input interface 13 in a DSP 12. A data bus 14 is connected to the input interface 13. The data bus 14 is connected to the a data memory 22 to temporarily store the data group of the digital audio signal supplied and to one input of a multiplier 15. A buffer memory 16 to hold coefficient data is connected to another input of the multiplier 15. A coefficient RAM 17 is connected to the buffer memory 16. A coefficient data group is stored into the RAM 17. One coefficient data is sequentially read out from the coefficient data group stored in the RAM 17 in response to a timing signal from a sequence controller 20, which will be explained hereinlater. The read-out coefficient data is supplied to the buffer memory 16 and held. The coefficient data held in the buffer memory 16 is supplied to the multiplier 15. An ALU (adder) 18 is provided to accumulate a calculation output of the multiplier 15. The calculation output of the multiplier 15 is supplied to one input of the ALU 18 and another input is connected to the data bus 14. An accumulator 19 is connected to the calculation output of the ALU 18. An output of the accumulator 19 is connected to the data bus 14. A memory control circuit 24 to control the data writing and reading operations of an external memory 23 is connected to the data bus 14. A delay time RAM 25 to store delay time data group is connected to the memory control circuit 24. The memory control circuit 24 executes the writing and reading operations of the digital audio signal data to the external memory 23 so as to delay the audio signal data by only each of the delay time data stored in the delay time RAM 25.

An output interface 21 is connected to the data bus 14. The digital audio signal generated from the output interface 21 is supplied to the D/A converter 10.

The operations of the interfaces 13 and 21, multiplier 15, coefficient RAM 17, ALU 18, accumulator 19, and memory control circuit 24 are controlled by the sequence controller 20. The sequence controller 20 operates in accordance with a processing program written in a program memory 30 and operates in accordance with a command from the controller 8.

In the sound field setting circuit 6 with the above construction, the digital audio signal data is supplied and stored into the data memory 22 through the interface 13. The sequence controller 20 generates timing signals to set the timing to read the data from the interface 13, the timing to selectively transfer the data from the data memory 22 to the multiplier 15, the timing to generate each coefficient data from the RAM 17, the timing for the multiplying operation of the multiplier 15, the timing for the adding operation of the ALU 18, the timing to generate the data from the accumulator 19, the timing to generate the data indicative of the result of the arithmetic operation from the interface 21, and the like, respectively.

By setting the above timings, the audio signal data supplied from the data memory 22 is read out and transmitted to the memory control circuit 24 through the data bus 14. The memory control circuit 24 sequentially writes the transmitted signal data into the external memory 23. The delay time data is sequentially read out from the delay time RAM 25 in accordance with the timing signal from the sequence controller 20. After the elapse of only the delay time designated by the delay time data, the signal data is sequentially read out by the memory control circuit 24. The read-out signal data is supplied to the data memory 22 through the data bus 14 and is sequentially stored as delay signal data.

The audio signal data stored in the data memory 22 or the delay signal data obtained by the above delaying process is sequentially read out and supplied to the multiplier 15. On the other hand, the coefficient data is read out from the RAM 17 and is supplied and held into the buffer memory 16. For instance, coefficient data α₁ supplied from the buffer memory 16 to the multiplier 15. A data d₁ is supplied from the data memory 22 to the multiplier 15. The multiplier 15 first calculates α₁·d₁. The result of the multiplication α₁·d₁ is added to the value of the accumulator 19 by the ALU 18. Since the initial value of the accumulator 19 is equal to 0, (0 +α₁·d₁) is calculated. The result (α₁·d₁) of the calculation is held in the accumulator 19. Subsequently, when count data α₂ from the buffer memory 16 and data d₂ from the data memory 22 are generated, (α₂·d₂) is calculated by the multiplier 15. (a₁·d₁) is generated from the accumulator 19. (α₁·d₁ + α₂·d₂) is calculated by the ALU 18. The result of the calculation is held in the accumulator 19. By repeating the above data multiplying and adding processes, Σαᵢ·dᵢ is calculated. An initial reflection sound component data is formed in this manner.

Since the sound field according to the sound field mode command which is supplied from the controller 8 is automatically set, therefore, complicated operations to set the sound field are unnecessary each time when a piece of music is selected.

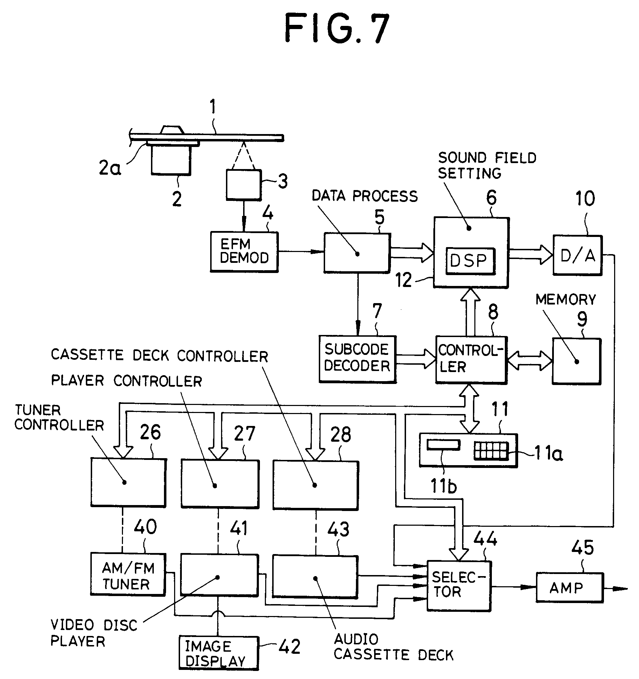

Fig. 7 shows a compound AV system according to the present invention. In the compound AV system, in addition to a compact disc player similar to that shown in Fig. 1, the system includes AV signal processing apparatuses such as AM/FM tuner 40, video disc player 41, image display 42 to display an image in accordance with a video signal from the video disc player, audio cassette deck 43, and the like. The system also has a selector 44 to alternatively relay the audio signals from the AV signal processing apparatuses and compact disc player. The audio signal relayed by the selector 44 is amplified by an amplifier 45 and supplied to speakers (not shown). A tuner controller 26, a player controller 27, and a cassette deck controller 28 are provided as controllers to control the operations of the AV signal processing apparatuses. These controllers are controlled by the controller 8 in a sequential manner. Such a sequence control is a control to execute, for instance, the AM tuner receiving operation, FM tuner receiving operation, playing operation of the video disc player, and reproducing operation of the audio cassette deck are sequentially executed for every short time. Such a sequence control can be used for the purpose of a demonstration of what is called a system component to be sold at an AV shop.

The controller 8 uses the disc number and the music number which are obtained from the subcode decoder in order to execute the above sequence control. That is, the controller 8 gives operation commands to the controllers 26, 27, and 28 and the selector 44 in correspondence to the disc number an the music number.

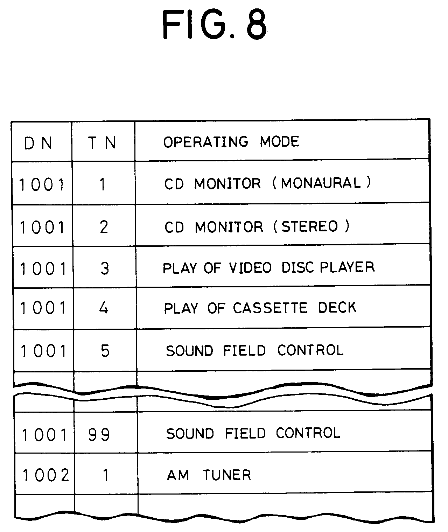

Fig. 8 is table showing correspondence examples between the combination of the disc number DN and the music number or the track number TN and the operation commands. In this case, DN1001 and DN1002 indicate the disc numbers of, for example, discs to be used for demonstration of a AV system to be sold.

Fig. 9 shows a subroutine for allowing the controller 8 to supply the operation commands to the controllers 26, 27, and 28 and the selector 44 in accordance with the table shown in Fig. 8. That is, the disc number and the music number which are obtained from the subcode decoder 7 are fetched (step S30). Subsequently, a table search is executed in accordance with the disc number and the music number derived and the corresponding operation command is read out from he table (step S31). The necessary command is obtained in accordance with the operation command derived and is supplied to the controllers 26, 27, and 28 and the selector 44.

When the operator wants to continue the operation corresponding to a certain track number due to the will of the operator, the compact disc player is set into the pause mode.

In the playing apparatus of a recording medium according to the invention and a compound AV system including such a playing apparatus as mentioned above, the medium identification signal and the music number identification signal are extracted from the read signal obtained by playing the recording medium. The sound field control according to these identification signals can be performed or the operation control can be executed in the operating mode according to these identification signals without performing complicated operations. The sound field suitable for the selected music can be automatically set during the play of the selected music. Further, a plurality of Av apparatuses can be automatically controlled by a desired control sequence which is defined by both of the medium and music identification signals read from a recording medium prepared for this purpose.

## Claims

1. A playing apparatus for playing a recording medium on which a plurality of music signals have been recorded together with music identification signals corresponding to said music signals and, further, a medium identification signal has also been recorded and for producing a read signal indicative of recording information on said recording medium, comprising:
separating and extracting means for separating and extracting said music signals, said music identification signals, and said medium identification signal from said read signal;
sound field mode instruction means for generating a sound field mode command corresponding to the music identification signal and said medium identification signal from said separating and extracting means; and
sound field control means for performing a sound field control process to said music signal in accordance with said sound field mode command.

2. A compound AV system having playing means for playing a recording medium on which a plurality of music signals have been recorded together with music identification signals corresponding to said music signals and, further a medium identification signal has also been recorded and for producing a read signal indicative of recording information on said recording medium, at least one AV signal processing means, and control means for controlling the operations of said playing means and said AV signal processing means,
wherein said control means comprises: separating and extracting means for separating and extracting said music signals, said music identification signals, and said medium identification signal from said read signal; and operation instructing means for giving an operation command to instruct the operating mode corresponding to said music identification signal and said medium identification signal from said separating and extracting means to said AV signal processing means.
